# EUROPEAN PATENT APPLICATION

(11) **EP 4 682 768 A1**
(43) Date of publication of application: **21.01.2026**
(21) Application number: 25784931.5
(22) Date of filing: 15.05.2025
(51) Int. Cl.: G06N 3/09, G06N 3/096, G06N 3/0475, G06F 40/20

(54) **TRAINING METHOD AND SYSTEM FOR INTENT CLASSIFICATION MODEL USING INTENT DESCRIPTIONS**

(30) Priority: 27.05.2024 KR 20240068512; 26.02.2025 KR 20250025026
(71) Applicant: LG Management Development Institute Co., Ltd., Seoul 07336 (KR)
(72) Inventor: SHIN, Joongbo, Seoul 07600 (KR); HONG, Taesuk, Seoul 04315 (KR); AHN, Youbin, Seoul 06262 (KR); LEE, Dongkyu, Hwaseong-si, Gyeonggi-do 18596 (KR); WON, Seungpil, Seoul 08844 (KR); HAN, Janghoon, Seoul 04315 (KR); CHOI, Jungkyu, Anyang-si, Gyeonggi-do 14099 (KR)
(74) Representative: BCKIP Part mbB
(86) International application number: PCT/KR2025/006612
(87) International publication number: WO 2025/249808

(57) **Abstract**

The system for training an intent classification model using intent descriptions of the present disclosure may generates a dataset including intent descriptions of the intent classification model from a language model, perform intent classification by using at least a portion of the dataset as an input prompt for the intent classification mode, and determine performance of the intent classification model by using at least a portion of the dataset as an input prompt for the intent classification model, wherein the dataset may include first data including independent intent descriptions in which intent names and intent descriptions for the intent names are mutually indistinguishable and second data including dependent intent descriptions in which intent names and intent descriptions for the intent names are mutually distinguishable.

## Description

### [TECHNICAL FIELD]

The present invention relates to a method for training an intent classification model and a system therefor, and more specifically, to a method for training an intent classification model using intent descriptions, in which the intent classification model is trained based on input data including intent descriptions to improve the accuracy of intent classification, and a system therefor.

### [BACKGROUND ART]

Recently, artificial intelligence (AI) technology has been drawing attention throughout the society as it shows advanced development trends. AI refers to computers performing human-specific intellectual capabilities with high-level capability, such as "computer brains that execute works that can be accomplished with human intelligence," "engineering and science that creates intelligent machines," and "a series of algorithmic systems designed to think, sense, and act like humans."

AI is being introduced as providing highly integrated smart spaces when used together with augmented reality, the Internet of Things, edge computing, digital twins, and the like, and is being emphasized as a core new technology that will lead the era of the Fourth Industrial Revolution. In addition, AI is drawing attention as a next-generation growth engine capable of evolving industrial ecosystems beyond solving standardized problems, and is being actively applied not only to IT, medical care, agriculture, energy, automobiles, and robots, but also to knowledge service industries such as distribution, finance, law, education, real estate, advertisement, and telecommunications. In other words, all existing systems are preparing for a new era by combining with AI, from industries that promote convenience or improvement in real life to all aspects of culture and arts in the society.

Recently, chatbots have been disclosed as task-oriented dialogue systems that engage in dialogue with users through voice or text-based input and perform specific tasks, and they are being used in various fields. Chatbots use dialogue type AI technologies such as natural language processing (NLP) to understand user queries and automatically generate and display responses thereto. Meanwhile, in such task-oriented dialogue systems, an intent classification technology that accurately identifies the user's intent from the user's query may be essential to accurately understand the user's query and provide appropriate services in response thereto. Research on intent classification for accurately identifying user intent from user queries and mapping user utterances to one of predefined intent sets is being actively conducted.

As related art, "Effectiveness of pre-training for few-shot intent classification" (https://aclanthology.org/2021.findings-emnlp.96/) (Zhang et al., Findings of the Association for Computational Linguistics: EMNLP 2021*)* has been disclosed.

### [SUMMARY OF THE INVENTION]

### [Technical Problem]

One object of one embodiment of the present invention is to provide a method for training an intent classification model using intent descriptions, in which an intent classification model of a large language model is trained with input data including intent descriptions to improve intent classification accuracy of mapping user utterances to one of a predefined set of intents, and a system therefor.

### [Technical Solution]

A system for training an intent classification model using intent descriptions according to one embodiment of the present invention may include: at least one processor; and at least one memory storing instructions or information executed by the at least one processor; and an operation performed by the instructions or information executed by the at least one processor may include: an operation of generating a dataset including intent descriptions of an intent classification model using a language model; an operation of performing intent classification by the intent classification model using at least a portion of the dataset as an input prompt for the intent classification model; and an operation of determining performance of the intent classification model using at least a portion of the dataset as an input prompt for the intent classification model; and the dataset may include: first data including independent intent descriptions in which intent names and intent descriptions for the intent names do not analyze context of other intent descriptions such that differences are mutually indistinguishable; and second data including dependent intent descriptions in which intent names and intent descriptions for the intent names analyze context of other intent descriptions such that differences are mutually distinguishable.

Here, a command prompt that is input to the language model to output the dataset from the language model may include: an independent prompt for obtaining the first data including a plurality of intent descriptions for a single intent; and a dependent prompt for obtaining the second data including a plurality of intent descriptions for a plurality of intents such that each of the plurality of intents and the plurality of intent descriptions are distinguished from each other. In addition, the input prompt may include: an instruction and user query section; and an intent option section including intent names and intent descriptions for the intent names.

In addition, the training system of one embodiment may further include a ranker that adjusts the number of the intent options, and the ranker may calculate similarity between the user query and the intent descriptions.

In addition, the intent classification model may be retrained using at least a portion of the first data or retrained using at least a portion of the second data.

In addition, at least a portion of the first data may be provided as an input prompt when determining performance of the intent classification model, or at least a portion of the second data may be provided as an input prompt when determining performance of the intent classification model.

In addition, the intent classification model, when retrained with at least a portion of the second data, may exhibit improved accuracy performance in intent classification.

A method for training an intent classification model using intent descriptions according to one embodiment may include: a step of generating a dataset including intent descriptions of an intent classification model using a language model; a step of performing intent classification by the intent classification model using at least a portion of the dataset as an input prompt for the intent classification model; and a step of determining performance of the intent classification model by using at least a portion of the dataset as an input prompt for the intent classification model; and the dataset may include: first data including independent intent descriptions in which intent names and intent descriptions for the intent names do not analyze context of other intent descriptions such that differences are mutually indistinguishable; and second data including dependent intent descriptions in which intent names and intent descriptions for the intent names analyze context of other intent descriptions such that differences are mutually distinguishable.

In addition, in the step of generating the dataset, a command prompt that is input to the language model to generate the dataset from the language model may be configured, and the command prompt may include: an independent prompt for obtaining the first data including a plurality of intent descriptions for a single intent; and a dependent prompt for obtaining the second data including a plurality of intent descriptions for a plurality of intents such that each of the plurality of intents and the plurality of intent descriptions are distinguished from each other.

In addition, in the step of performing intent classification by the intent classification model or in the step of determining performance of the intent classification model, the input prompt may include an instruction and user query section and an intent option section including intent names and intent descriptions for the intent names.

In addition, a ranker for controlling number of the intent options may calculate similarity between the user query and the intent descriptions and sort the intent descriptions in descending order according to the similarity.

In addition, in the step of performing intent classification by the intent classification model, the intent classification model may be retrained using at least a portion of the first data or retrained using at least a portion of the second data.

In addition, in the step of determining the performance of the intent classification model, at least a portion of the first data may be provided as an input prompt when determining performance of the intent classification model, or at least a portion of the second data may be provided as an input prompt when determining performance of the intent classification model.

In addition, the intent classification model, when retrained with at least a portion of the second data, may exhibit improved accuracy performance in intent classification.

### [Effects of the Invention]

According to one embodiment of the present invention, there can be provided a method for training an intent classification model using intent descriptions, in which an intent classification model is trained with input data including intent descriptions to improve intent classification accuracy of mapping user utterances to one of a predefined set of intents, and a system therefor.

### [BRIEF DESCRIPTION OF THE DRAWINGS]

FIG. 1 is a schematic diagram illustrating an electronic device according to one embodiment of the present invention.
FIG. 2 is a schematic diagram illustrating an example of a command prompt that is input to a language model.
FIG. 3 is a schematic diagram illustrating an example of an input prompt that is input to an intent classification model.
FIG. 4 is a schematic diagram illustrating a method for training an intent classification model using intent descriptions according to one embodiment of the present invention.
FIG. 5 is a schematic diagram illustrating accuracy performance of an intent classification model according to number of intent options.

### [BEST MODE FOR CARRYING OUT THE INVENTION]

To clearly describe the technical concept of the present disclosure, embodiments of the present invention will be described in detail with reference to the accompanying drawings. In describing the present disclosure, when it is determined that a detailed description of related known functions or components may unnecessarily obscure the gist of the present disclosure, the detailed description thereof will be omitted. In the drawings, components having substantially the same functional configuration are assigned the same reference numerals and symbols as much as possible even when shown in different drawings. For convenience of description, apparatus and method will be described together when necessary. Each operation of the present disclosure does not necessarily have to be performed in the described order, and may be performed in parallel, selectively, or individually.

The terms used in the embodiments of the present disclosure are selected as general terms that are currently widely used as much as possible while considering the functions in the present invention, but they may vary depending on the intent of those of ordinary skill in the art, precedents, the emergence of new technology, or the like. In addition, in certain cases, there are terms arbitrarily selected by the applicant, and in this case, the meaning will be described in the corresponding part of the detailed description of the invention. Therefore, the terms used herein should be defined based on the meaning of the terms and the overall content of the present disclosure, rather than simply the names of the terms.

Throughout the present disclosure, singular expressions may include plural expressions unless the context clearly indicates otherwise. Terms such as "comprise" or "have" are intended to specify the presence of features, numbers, steps, operations, components, parts, or combinations thereof and should be understood as not precluding the possibility of the presence or addition of one or more other features, numbers, steps, operations, components, parts, or combinations thereof. In other words, throughout the present disclosure, when a part is said to "comprise" a certain element, unless otherwise specified, it means that other elements may be further included rather than excluding other elements.

An expression such as "at least one of" modifies the entire list of components and does not individually modify the components of the list. For example, "at least one of A, B, and C" and "at least one of A, B, or C" refer to only A, only B, only C, both A and B, both B and C, both A and C, all of A, B, and C, or combinations thereof.

In addition, terms such as "portion" and "module" described in the present disclosure refer to a unit that processes at least one function or operation, and may be implemented by hardware or software or a combination of hardware and software.

Throughout the present disclosure, when a part is referred to as being "connected" to another part, this includes not only the case of being "directly connected" but also the case of being "electrically connected" with another element interposed therebetween. Furthermore, when a part is referred to as "comprising" a component, this means that other components may be further included without excluding other components, unless specifically stated otherwise.

The expression "configured to" as used throughout the present disclosure may be used interchangeably with, for example, "suitable for," "having the capacity to," "designed to," "adapted to," "made to," or "capable of," depending on the context. The term "configured to" may not necessarily mean "specifically designed to" only in terms of hardware. Instead, in some contexts, the expression "a system configured to" may mean that the system is "capable of" in conjunction with other devices or components. For example, the phrase "a processor configured to perform A, B, and C" may refer to a dedicated processor (e.g., an embedded processor) for performing the operations in question, or a general-purpose processor (e.g., a CPU or application processor) that is capable of performing the operations in question by executing one or more software programs stored in a memory.

Artificial intelligence (AI) is a field of computer engineering and information technology that studies methods for enabling a computer to perform thinking, learning, self-development, and the like that may be performed by human intelligence, and refers to enabling a computer to mimic intelligent behavior of humans. Furthermore, AI does not exist by itself, but has many direct and indirect relationships with other fields of computer science. In particular, attempts to introduce AI elements into various fields of information technology and utilize them for solving problems in those fields have been very actively made in modern times.

Machine learning is a field of AI and is a research field that gives computers the ability to learn without explicit programming. Specifically, machine learning may be referred to as a technology for studying and building systems that perform learning and prediction based on empirical data and improve their own performance, and algorithms therefor. Machine learning algorithms take an approach of building specific models to derive predictions or decisions based on input data, rather than performing strictly defined static program instructions.

Many machine learning algorithms have been developed according to how to classify data in machine learning. Representative examples include decision tree, Bayesian network, support vector machine (SVM), and artificial neural network (ANN). A decision tree is an analysis method that performs classification and prediction by plotting decision rules in a tree structure. A Bayesian network is a model that expresses probabilistic relationships (conditional independence) between a plurality of variables in a graph structure. Bayesian networks are suitable for data mining through unsupervised learning. An SVM is a model of supervised learning for pattern recognition and data analysis, and it is mainly used for classification and regression analysis. An ANN is an information processing system in which a plurality of neurons, called nodes or processing elements, are connected in the form of a layer structure by modeling the operating principles of biological neurons and the connection relationships between neurons.

An ANN is a model used in machine learning, and it is a statistical learning algorithm inspired by biological neural networks (particularly brains in the central nervous system of animals) in machine learning and cognitive science. Specifically, an ANN may generally refer to models in which artificial neurons (nodes) forming a network by synaptic connections change the connection strength of synapses through learning to have problem-solving capability. The ANN may be used interchangeably with the term neural network.

An ANN may include a plurality of layers, and each of the layers may include a plurality of neurons. An ANN may also include synapses that connect neurons to neurons. An ANN may generally be defined by the following three factors: ① connection patterns between neurons of different layers, (2) a learning process that updates connection weights, and ③ an activation function that generates an output value from a weighted sum of inputs received from a previous layer.

ANNs may include network models such as deep neural networks (DNN), recurrent neural networks (RNN), bidirectional recurrent deep neural networks (BRDNN), multilayer perceptrons (MLP), and convolutional neural networks (CNN), but are not limited thereto.

ANNs are classified into single-layer neural networks and multilayer neural networks according to the number of layers. A general single-layer neural network includes an input layer and an output layer. A general multilayer neural network includes an input layer, one or more hidden layers, and an output layer.

The input layer is a layer that receives external data, and the number of neurons in the input layer is equal to the number of input variables. The hidden layer is located between the input layer and the output layer, receives signals from the input layer, extracts features, and transmits them to the output layer. The output layer receives signals from the hidden layer and outputs output values based on the received signals. Input signals between neurons are multiplied by respective connection strengths (weights) and then summed, and when this sum is greater than the neuron's threshold, the neuron is activated and outputs an output value obtained through an activation function.

Meanwhile, a deep neural network including a plurality of hidden layers between an input layer and an output layer may be a representative ANN implementing deep learning, which is a type of machine learning technology. Meanwhile, the term "learning" may be used interchangeably with "training."

The workflow of machine learning consists of a series of processes for collecting data for training and validation, modeling, and training the model, and may include the processes of training data collection, data inspection and exploration, data preprocessing and cleaning, modeling, and training.

### 1. Training Data Collection

The training data applied to training of the learning model of the present disclosure may be generated using data collected from multiple samples. In the present disclosure, at least one or more different types of training datasets may be used to train the learning model, and each training dataset may further include one or more experiment-based results used as functional labels. At least a portion of the training datasets may be used to train the learning model, and another portion may be used to validate the trained learning model.

### 2. Data Inspection and Exploration

Once training data for learning of the learning model is collected, the collected training data may be subjected to inspection and exploration regarding data structure, noise data, and data cleaning methods for machine learning application.

This data inspection and exploration step is referred to as an Exploratory Data Analysis (EDA) step, and EDA may be referred to as a process of observing and understanding collected data from various perspectives. Before learning the data, independent variables, dependent variables, variable types, data types of variables, and the like are inspected through visualization, such as graphs, and statistical tests, and the characteristics of the data and inherent structural relationships may be confirmed in advance. By examining the distribution and values of the data through such EDA, the phenomenon represented by the data can be better understood, and potential problems with the data can be discovered. In addition, through the process of inspecting the data from various perspectives, various patterns that may not have been identified in the problem definition step can be discovered, and based on these, existing hypotheses can be modified or new hypotheses can be established. Exploratory data analysis may broadly include a process of exploring outliers in the data and a process of analyzing relationships between data attributes.

The process of exploring outliers is to check whether outliers are present in the data and may include sampling methods, statistical methods, visualization methods, and the like. The sampling method extracts random samples from the data to confirm overall trends and anomalies in the data values. The statistical method may use summary statistics such as mean, median, and mode for confirming the center of the data, or range and variance for confirming the dispersion of the data. The visualization method may utilize probability density functions, histograms, dot plots, word clouds, time series charts, maps, and the like to determine which statistical indicators are appropriate for individual attributes of the collected data. However, when using statistical indicators, it should be noted that since all data values in the set are reflected in the mean, the mean value is affected when there are outliers, but since one value located in the middle is used as the median, representative results may be obtained even in the presence of outliers.

The process of analyzing relationships between data attributes involves finding combinations of attributes that have meaningful correlations with each other within the data, and the relationship analysis may be performed differently according to attribute combinations between qualitative attributes (categorical variables) that may not be expressed numerically but may be arbitrarily quantified and quantitative attributes (numeric variables) that may be quantified. Qualitative-qualitative relationships (categorical-categorical) may display the number of values corresponding to each pair of attribute values using cross tables and mosaic plots, quantitative-qualitative relationships (numeric-categorical) may be observed through statistical values (mean, median, etc.) for each category or visually represented through box plots. Quantitative-quantitative relationships (numeric-numeric) may analyze the association between two attributes through correlation coefficients. It may be confirmed that a correlation coefficient of -1 indicates a negative correlation where two attributes change in opposite directions, 0 indicates no correlation, and 1 indicates a positive correlation where two attributes always change in the same direction. The relationship between two attributes having a correlation coefficient may also exhibit various patterns, which may be visually represented using scatter plots.

### 3. Data Preprocessing and Cleaning

Data that has completed inspection and exploration undergoes data preprocessing to be processed into a form suitable for models for machine learning. Data preprocessing involves cleaning data and transforming it into a form that may be understood by the model, and data preprocessing may generally include handling missing data, outlier removal, data scaling, categorical data encoding, feature selection and extraction, and data transformation. All or part of the detailed processes of data preprocessing may be selectively performed, and a separate machine learning model may be used for data preprocessing.

Handling missing data is processing missing values when they are present in the data, wherein the missing values may be represented as NaN (Not a Number) or null values or may be deleted. As the missing values are filled or deleted within the data, the completeness of the data is improved, and when filling the missing values, an average value, a median value, a mode value, or the like may be used.

Outlier removal is removing outliers from data, which are values that deviate from typical data patterns. Since outliers may degrade model performance, they must be removed or replaced, and outliers may be identified and corresponding rows or columns may be deleted or replaced with other values.

Data scaling is a process of adjusting the size of data, and the range of data may be adjusted through data scaling so that the performance of the model may be improved or the convergence speed may be enhanced. Through data scaling, the characteristics of the data may be adjusted to a similar range, and generally, standardization and normalization may be applied to data scaling. Standardization is a method of converting data into a distribution with a mean of 0 and a standard deviation of 1, mainly using the mean and the standard deviation for conversion, and the standardized value z may be denoted as *z=*(*x-*µ)/*c* (where x is the original value, µ is the mean, and σ is the standard deviation). Normalization is a method of converting the range of data to [0,1] or [-1,1], mainly using the minimum value and the maximum value to transform the data, and the normalized value xₙₒᵣₘ may be denoted as *xₙₒᵣₘ=*(*x-x*ₘᵢₙ)/(*x*ₘₐₓ-*x*ₘᵢₙ) (where x is the original value, xₘᵢₙ is the minimum value, and xₘₐₓ is the maximum value).

Categorical data encoding is converting categorical variables represented by character strings or integer values that may not be directly input to a model into numerical form that may be input to the model. Generally, one-hot encoding or label encoding may be used to convert categorical variables into numerical form.

Feature selection and extraction is for selecting the most useful features for model learning or extracting new features to improve the performance of the model, and through this process, the complexity of the model can be reduced and overfitting can be prevented.

Data transformation is for transforming data to extract new information or enable the model to better understand the data, and it may include tokenization of text data or preprocessing of image data. Through data transformation, useful features may be extracted from original data, or data may be transformed into an appropriate form to improve the performance of the model. Through the above-described data preprocessing, the effects of improving performance and ensuring stability of the machine learning model can be achieved.

Meanwhile, when training the learning model according to one embodiment of the present invention, a process of preprocessing information expressed in natural language and a process of training a language model based on the preprocessed data may be performed.

### 3-1. Text Preprocessing for Large Language Models

When the collected data is not preprocessed as needed, tokenization, cleaning, and normalization may be performed according to the intended use of the data.

Tokenization refers to the operation of dividing given data into units called tokens, and the units of tokens may generally be defined as meaningful units. Tokenization may broadly include word tokenization and sentence tokenization.

Word tokenization refers to a case where tokens are based on words, and here the word may include word phrases and character strings having meaning in addition to word units. Word tokenization refers to separating words based on symbols such as spaces or punctuation marks, for example, periods, commas, question marks, semicolons, exclamation marks, and the like. However, when all punctuation marks and special characters are removed during the tokenization operation, tokens may lose their meaning, and thus a precise algorithm for tokenization may be required. For example, when a word itself includes punctuation marks or special characters having meaning are used, the problem may not be solved simply by removing such punctuation marks or special characters. Therefore, tokenization rules such as Penn Treebank Tokenization rules may be applied during tokenization.

Sentence tokenization refers to dividing text into sentence units. Typically, when data has not been cleaned, a corpus is not divided into sentence units, so sentence tokenization may be required to suit the intended use of the corpus. For such sentence tokenization, various rules may be defined depending on the language used and how special characters are used within the corpus.

The operation of classifying tokens according to their intended use is called tokenization, and before and after the tokenization operation, cleaning and normalization are performed on the text data according to the intended use. Cleaning involves removing noise data, and normalization involves integrating words with different representation methods to convert them into the same word.

The cleaning operation may be performed before the tokenization operation to exclude parts that interfere with the tokenization operation, but it may also be continuously and repeatedly performed to remove noise that still remains after the tokenization operation. The noise data removed in the cleaning operation consists of characters that have no meaning, and methods for removing unnecessary words include stop word removal and methods for removing words with low occurrence frequency and short-length words.

The normalization operation includes integration of words with different notations based on rules, uppercase/lowercase integration, and the like. Uppercase/lowercase integration is a normalization method that may reduce the number of words in English-language texts. In English, uppercase letters are used only in specific situations such as at the beginning of sentences, and most text is written in lowercase letters. Therefore, the uppercase/lowercase integration operation may mainly consist of a lowercase conversion operation that converts uppercase letters to lowercase letters.

In order to process natural language in a computing system, a preprocessing operation of converting text into numerical values is required, and to this end, an operation of mapping each word of the text to a unique integer is performed. Such a mapping process may utilize techniques such as integer encoding, padding, and one-hot encoding.

Integer encoding is one method of assigning integers to words, and in this method, a vocabulary in which words are arranged in order of frequency is created, and integers are sequentially assigned from lower numbers in order of highest frequency. Integer encoding performs sentence tokenization from text data including multiple sentences as well as word tokenization in parallel with cleaning and normalization operations. At this time, words are converted to lowercase to standardize the number of words, and words may be deleted based on stop words and word length criteria. Through this process, words may be recorded as keys and the frequency of each word may be recorded as values. After arranging words in the text in order of frequency, integer encoding may be performed by assigning integers to words having high frequency.

Padding is an operation for arbitrarily equalizing the lengths of sentences having different lengths within text. A computing system may bundle sentences having the same length as a single matrix to enable parallel operations. In other words, to perform parallel operations of the computing system, the integer encoding results of sentences having different lengths within the text may be arbitrarily filled with '0' to equalize the lengths of the sentences. In other words, the longest sentence is identified in the word set for which integer encoding has been completed, and "0" may be added to the integer matrix to correspond to the length of the longest sentence. The computing system may recognize sentences having the same length as one matrix to perform parallel processing, wherein the computing system may ignore the "0" word which is recognized as meaningless. Filling data with a specific value to adjust the shape of the data in this manner is called padding, and when the number "0" is used for length adjustment, it is referred to as zero padding.

One-hot encoding is a vector representation method for words in which the size of the word set serves as the dimension of the vector, a value of 1 is assigned to the index of the word to be represented, and 0 is assigned to other indices. The vector represented in this manner is called a one-hot vector. One-hot encoding includes integer encoding and an index assignment process. After integer encoding is performed to assign a unique integer to each word, the unique integer of the word to be represented is regarded as an index, and "1" is assigned to the corresponding position, while "0" is assigned to the positions of indices of other words. However, one-hot encoding has disadvantages in that the space required to store vectors increases as the number of words increases (increase in vector dimension) and that the similarity between words may not be determined. To overcome these disadvantages, techniques for vectorizing words into a multidimensional space by reflecting the latent meaning of words include count-based vectorization methods such as latent semantic analysis (LSA), prediction-based vectorization methods such as NNLM, RNNLM, Word2Vec and FastText, and the GloVe method which uses both count-based and prediction-based approaches.

Meanwhile, in order for computers to understand and process text, the text must be appropriately converted into numbers. Since the performance of natural language processing significantly varies depending on the method of representing words, many technologies for numericalizing words have been proposed. Currently, word embedding methods that vectorize each word through ANN learning are most widely used.

Word embedding is a method of representing words as vectors, converting words into dense representations. The result derived through the word embedding process is called a dense vector or embedding vector. Word embedding methodologies include LSA, Word2Vec, FastText, GloVe, and the like.

### 4. Modeling and Training

An ANN may be trained using training data. Here, training may refer to a process of determining parameters of the ANN using training data to achieve objectives such as classification, regression analysis, or clustering of input data. Representative examples of parameters of the ANN include weights assigned to synapses and biases applied to neurons.

The ANN trained by training data may classify or cluster input data according to patterns possessed by the input data. Meanwhile, an ANN trained using training data may be referred to as a trained model herein.

The following describes methods of training ANNs. Methods of training ANNs may be broadly classified into supervised learning, unsupervised learning, semi-supervised learning, and reinforcement learning.

Supervised learning is a method of machine learning for inferring a function from training data. Among such inferred functions, those that output continuous values are called regression analysis, and those that predict and output the class of input vectors are called classification.

In supervised learning, an ANN is trained with training data for which labels are provided. Here, a label refers to the correct answer (or result value) that the ANN should infer when training data is input to the ANN Herein, the correct answer (or result value) that the ANN should derive when training data is input is referred to as a label or labeling data. Additionally, herein, setting a label on training data for training of the ANN is referred to as labeling the training data with labeling data. In this case, the training data and the label corresponding to the training data constitute one training set, and they may be input to the ANN in the form of a training set.

Meanwhile, the training data represents a plurality of features, and that the training data is labeled with a label may mean that the features represented by the training data are labeled. In this case, the training data may represent the features of the input object in a vector form. The ANN may infer a function for the association relationship between the training data and the labeling data by using the training data and the labeling data. In addition, parameters of the ANN may be determined (optimized) through evaluation of the function inferred by the ANN. Unsupervised learning is a type of machine learning in which no label is given to the training data. Specifically, unsupervised learning may be a learning method in which an ANN is trained to find and classify patterns in the training data itself, rather than an association relationship between the training data and a label corresponding to the training data. Examples of unsupervised learning include clustering or independent component analysis.

Examples of ANNs using unsupervised learning include a generative adversarial network (GAN) and an autoencoder (AE).

A GAN is a machine learning method in which two different AIs, a generator and a discriminator, compete to improve performance. In this case, the generator is a model that creates new data, and it may generate new data based on original data. In addition, the discriminator is a model that recognizes patterns of data, and it may serve to discriminate whether input data is original data or new data generated by the generator. In addition, the generator may receive and learn from data that failed to fool the discriminator, and the discriminator may receive and learn from the data from the generator that fooled the discriminator. Accordingly, the generator may evolve to fool the discriminator as well as possible, and the discriminator may evolve to well distinguish between the original data and the data generated by the generator.

An autoencoder is a neural network that aims to reproduce an input itself as an output. The autoencoder includes an input layer, at least one hidden layer, and an output layer. In this case, since the number of nodes of the hidden layer is less than the number of nodes of the input layer, the dimensions of the data are reduced, and thus compression or encoding is performed. In addition, the data output from the hidden layer enters the output layer. In this case, since the number of nodes of the output layer is greater than the number of nodes of the hidden layer, the dimensions of the data are increased, and thus decompression or decoding is performed. Meanwhile, the autoencoder adjusts the connection strength of neurons through learning, so that the input data is represented as hidden layer data. In the hidden layer, information is represented by a smaller number of neurons than in the input layer, but that the input data may be reproduced as the output may mean that the hidden layer discovers and represents hidden patterns from the input data.

Semi-supervised learning is a type of machine learning, and it may refer to a learning method that uses both training data with a given label and training data without a given label. One technique of semi-supervised learning is inferring a label of training data without a given label and then performing learning using the inferred label, and such a technique may be effectively used when the cost involved in labeling is high.

Reinforcement learning is based on a theory that an agent may find the best way through experience without data, given an environment in which the agent may determine what action to take at every moment. Reinforcement learning may be performed mainly by a Markov Decision Process (MDP). To describe the Markov decision process, first, an environment in which information necessary for the agent to take a next action is configured is given, second, how the agent should act in the environment is defined, third, what the agent does well is rewarded and what it does poorly is penalized, and fourth, an optimal policy is derived through iterative experience until a future reward reaches a maximum point.

The structure of an ANN is specified by the model configuration, activation function, loss function or cost function, learning algorithm, optimization algorithm, and the like, and hyperparameters may be preset before learning, and thereafter model parameters may be set through learning to specify the content.

For example, elements that determine the structure of an ANN may include the number of hidden layers, the number of hidden nodes included in each hidden layer, input feature vectors, target feature vectors, and the like.

The hyperparameter includes various parameters that need to be initially set for learning, such as an initial value of a model parameter. In addition, the model parameter includes various parameters to be determined through learning. For example, the hyperparameters may include an initial value of the weight of the nodes, an initial value of the bias of the nodes, a mini-batch size, a number of learning iterations, a learning rate, and the like. In addition, the model parameters may include a weight of the nodes, a bias of the nodes, and the like.

The loss function may be used as an indicator (criterion) for determining optimal model parameters in the learning process of an ANN. In ANNs, learning refers to a process of manipulating model parameters to reduce the loss function, and the purpose of learning may be viewed as determining model parameters that minimize the loss function. The loss function may mainly use mean squared error (MSE) or cross entropy error (CEE), and the present invention is not limited thereto. The CEE may be used when a correct answer label is one-hot encoded. One-hot encoding is an encoding method in which a correct answer label value is set to 1 only for a neuron corresponding to a correct answer, and a correct answer label value is set to 0 for neurons that are not correct answers.

In machine learning or deep learning, a learning optimization algorithm may be used to minimize the loss function. Examples of the learning optimization algorithm include gradient descent (GD), stochastic gradient descent (SGD), Momentum, Nesterov Accelerated Gradient (NAG), Adagrad, AdaDelta, RMSProp, Adam, Nadam, and the like.

GD is a technique of adjusting model parameters in a direction that reduces the loss function value by considering the gradient of the loss function in the current state. The direction in which the model parameters are adjusted is referred to as a step direction, and the magnitude of the adjustment is referred to as a step size. In this case, the step size may refer to a learning rate. In GD, the gradient may be obtained by partially differentiating the loss function with respect to each model parameter, and the model parameters may be updated by changing them by the learning rate in the obtained gradient direction.

SGD is a technique in which the training data is divided into mini-batches, and GD is performed for each mini-batch to increase the frequency of gradient descent.

Adagrad, AdaDelta, and RMSProp are techniques for adjusting the step size in SGD to increase optimization accuracy. Momentum and NAG in SGD are techniques for adjusting the step direction to increase optimization accuracy. Adam is a technique for adjusting both the step size and the step direction by combining Momentum and RMSProp to increase optimization accuracy. Nadam is a technique for adjusting both the step size and the step direction by combining NAG and RMSProp to increase optimization accuracy.

The learning speed and accuracy of an ANN are greatly dependent on the structure of the ANN and the type of learning optimization algorithm as well as hyperparameters. Therefore, in order to obtain a good learning model, it is important not only to determine an appropriate ANN structure and learning algorithm, but also to set appropriate hyperparameters.

Typically, hyperparameters are experimentally set to various values while training the ANN, and as a result of the training, they are set to optimal values that provide stable learning speed and accuracy.

Embodiments of the present invention are applied to a chatbot that conducts conversations with users through voice or text-based input and performs specific tasks, serving to understand a speaker's question and output appropriate answers. The structure of a chatbot may include question intent classification, named-entity recognition, core keyword extraction, answer retrieval, and the like, depending on core functions. The question intent classification function identifies the speaker's question intent by predicting an intent class for the question using an intent classification model. The named-entity recognition function recognizes named-entities for each word token in the speaker's question, and the core keyword extraction function extracts key nouns or verbs from the meaning of the speaker's question using a morphological analyzer or the like. The answer retrieval function searches for and displays corresponding appropriate answers from a training database based on the intent of the question, recognized named-entities, extracted core keywords, and the like. In other words, when a user's query sentence is input, the chatbot performs preprocessing on the sentence, extracts keywords (word tokens) through a morphological analyzer, extracts only necessary keywords such as nouns or verbs, and removes stop words. Thereafter, the chatbot performs an intent analysis and named-entity recognition on the extracted keywords to derive corresponding answers, and for this purpose, chatbots generally use deep learning models such as intent analysis (classification) models and named-entity recognition models for natural language processing.

The present embodiment may relate to fine tuning or prompt engineering for improving the accuracy of intent classification models, which are key components of such chatbots. Fine tuning or prompt engineering is a technique for enhancing the accuracy and usability of deep learning models. Fine tuning involves retraining a pre-trained model to suit a specific task or dataset and requires domain-specific data. Prompt engineering involves optimizing the input prompts of a model to obtain desired output results and can be effectively applied to various tasks in a relatively short time using a relatively small amount of data compared to fine tuning. The method and system for training an intent classification model using intent descriptions according to one embodiment of the present invention may include both an intent classification model that is prepared by retraining a pre-trained model based on training data including intent descriptions and an intent classification model that performs reasoning from the intent classification model based on input data including intent descriptions (input prompts).

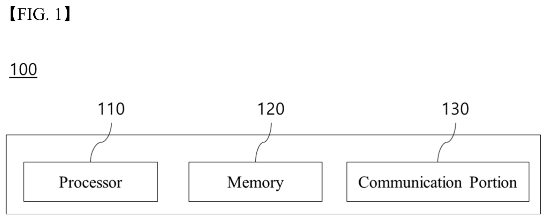

The method and system for training an intent classification model using intent descriptions according to one embodiment of the present invention may be applied to various fields using large language model-based chatbots. The intent classification model optimized according to this embodiment may be utilized for customer support chatbots based on enterprise customer service data, domain models optimized for specific domains (work areas) such as medical/legal/financial domains, various natural language processing tasks such as text generation/summarization/translation, market trend analysis reflecting the latest information and trends, personalized recommendation systems based on user service usage data, and the like. FIG. 1 is a schematic diagram illustrating an electronic device according to one embodiment of the present invention.

As shown in FIG. 1, the electronic device 100 according to one embodiment of the present invention (hereinafter referred to as the electronic device) may include at least one processor 110, a memory 120, and a communication portion 130. The electronic device 100 is a basic component for performing a computing environment, and in other embodiments, the electronic device 100 may be implemented by additionally or alternatively including some other components, may be implemented as a single or plurality of entities, or may be implemented with only some of the disclosed components. At least some of the components inside or outside the electronic device 100 may be connected to each other through a BUS, General Purpose Input/Output (GPIO), Serial Peripheral Interface (SPI), Mobile Industry Processor Interface (MIPI), or the like to transmit and receive data or signals.

The processor 110 may refer to a set of one or more processors unless the context clearly indicates otherwise, and it may control the components of the processor 110 and the electronic device 100 by driving at least software (e.g., instructions, programs, etc.) stored in the memory 120. In addition, the processor 110 may perform various operations such as computations, processing, data generation, or processing, and it may read data from the memory 120 or store data in the memory 120. The processor 110 may be configured with at least one core and may include processors for data analysis, machine learning (ML), or deep learning (DL), such as a central processing unit (CPU), a general purpose graphics processing unit (GPGPU), or a tensor processing unit (TPU). The processor 110 may read software stored in the memory 120 to perform data processing for machine learning (or deep learning) of the present invention. According to one embodiment of the present disclosure, the processor 110 may perform computations for training a neural network. The processor 110 may perform calculations for training a neural network, such as processing input data for training in deep learning, feature extraction from the input data, error calculation, and updating weights of the neural network using backpropagation. At least one of the CPU, the GPGPU, and the TPU of the processor 110 may process training of the neural network model. For example, the CPU and the GPGPU may together process training of a neural network model and data classification using the neural network model. In addition, in one embodiment of the present disclosure, at least one processor 110 of the electronic device 100 may be used together to process training of a neural network model and data classification using the neural network model.

The memory 120 is for storing various data, and the data may include software (e.g., instructions, programs, etc.) as data obtained, processed, or used by at least one component of the electronic device 100. The memory 120 may refer to a set of one or more memories unless the context clearly indicates otherwise, and it may include at least one type of storage medium among flash memory type, hard disk type, multimedia card micro type, card type memory (e.g., SD or XD memory, etc.), RAM, SRAM (Static Random Access Memory), ROM, EEPROM (Electrically Erasable Programmable Read-Only Memory), PROM (Programmable Read-Only Memory), magnetic memory, magnetic disk, optical disk, and web storage performing a storage function on the Internet. Instructions, programs, or software stored in the memory 120 may be used to refer to an operating system for controlling components of the electronic device 100, applications, or middleware that provides various functions to applications so that the applications may utilize the components of the electronic device 100. In one embodiment, when the processor 110 performs a specific computation, the memory 120 may store instructions performed by the processor 110 and corresponding to the specific computation.

The communication portion 130 performs wireless or wired communication between the electronic device 100 and another device (e.g., a user terminal or another server). The communication portion 130 may use wireless communication systems according to schemes such as eMBB, URLLC, MMTC, LTE, LTE-A, NR, UMTS, GSM, CDMA, WCDMA, TDMA, FDMA, OFDMA, SCFDMA, WiBro, WiFi, Bluetooth, NFC, GPS, or GNSS. In addition, the communication portion 130 may use various wired communication systems such as USB, HDMI, Recommended Standard-232 (RS-232), Plain Old Telephone Service (POTS), Public Switched Telephone Network (PSTN), x Digital Subscriber Line (xDSL), Rate Adaptive DSL (RADSL), Multi Rate DSL (MDSL), Very High Speed DSL (VDSL), Universal Asymmetric DSL (UADSL), High Bit Rate DSL (HDSL), and Local Area Network (LAN). In one embodiment of the present invention, the communication portion 130 may be configured regardless of communication modes such as wired communication and wireless communication, and it may be configured as various communication networks such as a Personal Area Network (PAN), Wide Area Network (WAN), or the like. In addition, the network may be a known World Wide Web (WWW), or it may use wireless transmission technology used for short-range communication such as Infrared Data Association (IrDA) or Bluetooth. The techniques described in one embodiment of the present invention may also be used in other networks mentioned above.

The electronic device 100 according to an embodiment of the present invention may execute software that configures a system for training an intent classification model using intent descriptions or configures a method for training an intent classification model using intent descriptions.

The system for training an intent classification model according to an embodiment of the present invention may be applied to task-oriented dialogue systems such as chatbots and used to improve the accuracy of intent classification models for understanding the intent of user queries. Generally, an intent classification model is capable of predicting domains (or classes) used in training. Therefore, even when unseen data is given as input to such a pre-trained intent classification model, it is necessary to smoothly perform prediction or classification of the unseen data, and in this case, additional work (fine-tuning or prompt engineering) on the intent classification model may be required. In other words, the intent classification model may be modified so that even when unseen data is input to the intent classification model, it predicts or classifies unseen domains (classes; unseen domain or unseen class) that are not included in the training dataset, rather than classifying into one of the learned domains (classes; seen domain or seen class) by internal mechanisms. When modifying such an intent classification model, the system and method for training the intent classification model of this embodiment may be applied.

In one embodiment, independent intent descriptions, dependent intent descriptions, and refined intent descriptions may be generated. An independent intent description includes a description for only one intent and may be obtained by providing three user query examples for that intent together. At this time, by not including information about other intents, the intent may be described independently without comparison targets. Accordingly, independent intent descriptions may have relatively low quality because they do not analyze the context of other intent descriptions and do not sufficiently reflect relative differences with other intents. Dependent intent descriptions may be generated by providing prompts that include a list of all intents so that the description of each intent is distinguished from other intents. In other words, since the generated dependent intent descriptions may clearly distinguish a specific intent from other intents by analyzing the context of other intent descriptions, they are likely to have relatively higher quality than independent intent descriptions. Considering the possibility that automatically generated intent descriptions such as independent intent descriptions and dependent intent descriptions may not clearly reflect differences between intents, refined intent descriptions that are directly refined by humans may also be generated. Refined intent descriptions are descriptions manually written by humans with one description for each intent, and since they are written such that an intent is clearly distinguished from other intents, and they may have higher quality than automatically generated descriptions.

A system for training an intent classification model using intent descriptions according to one embodiment of the present invention may output a dataset including intent descriptions of the intent classification model from a language model, perform intent classification by using at least a portion of the dataset as an input prompt for the intent classification model, and determine performance of the intent classification model by using at least a portion of the dataset as an input prompt for the intent classification model. Here, the dataset may include first data including independent intent descriptions and second data including dependent intent descriptions. In other words, the intent classification model may be retrained or tested with the first data or the second data.

The training system of one embodiment may obtain or generate a dataset for retraining a pre-trained intent classification model from a separate language model. The language model of one embodiment of the present invention may use an AI chatbot that generates output corresponding to an input prompt, for example, ChatGPT, and may be particularly applied in an interim reasoning process before performing a next reasoning process in the Chain of Thought (CoT) reasoning process of the AI chatbot. The training system of one embodiment may obtain two datasets from a language model: the first data may be data including independent intent descriptions; and the second data may be data including dependent intent descriptions.

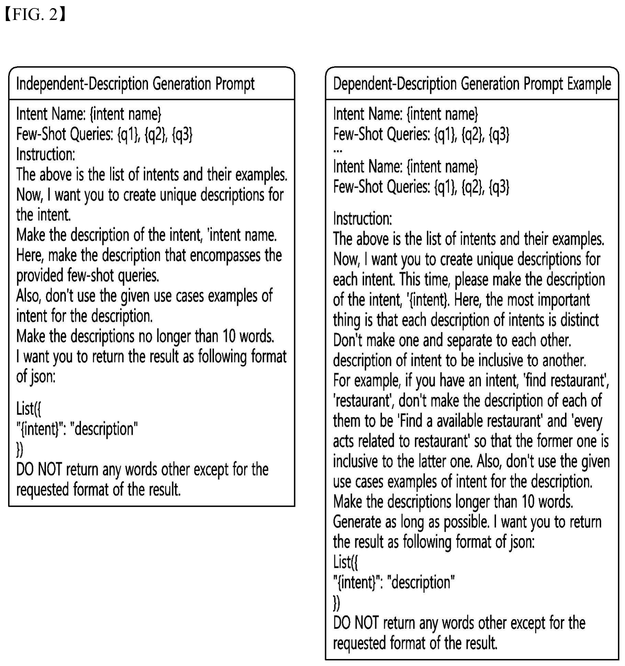

In other words, as shown in FIG. 2, the training system of one embodiment may obtain the first data and the second data by respectively inputting a command prompt for including independent intent descriptions (independent prompt) and a command prompt for including dependent intent descriptions (dependent prompt) into a language model such as ChatGPT.

Referring to FIG. 2, through an independent prompt, first data may be obtained such that intent descriptions are included for a single intent. In other words, the first data obtained through an independent prompt may include an intent name and an intent description for the intent name. The first data obtained through such independent prompts includes a plurality of intent names and intent descriptions for the intent names, and the plurality of intent names included in the first data become difficult or impossible to determine differences from each other by the intent classification model (non-distinguishable). In other words, the independent prompt includes a single intent and three user queries for the intent, and at that time, other intents are excluded from the prompt. Accordingly, the collected intent descriptions lack comparative context with other intents, resulting in low quality of the intent descriptions. In one embodiment, the independent prompt may be called multiple times to obtain a plurality of independent intent descriptions for a single intent name.

Referring to FIG. 2, through a dependent prompt, second data may be obtained such that intent descriptions are included for a plurality of intents. In other words, the second data obtained through the dependent prompt may include a plurality of intent names and intent descriptions for the respective intent names. Such second data includes a plurality of intent names and intent descriptions for the respective intent names, and the mutual differences among the plurality of intent names included in the second data may be determined by the intent classification model. In other words, the dependent prompt includes a plurality of intents in one prompt and three user queries for each intent. A plurality of intents are included in one dependent prompt, and the instructions of the prompt may be configured to obtain intent descriptions for the plurality of intents, such that each intent description should not encompass a parent or subordinate concept of another intent description. Accordingly, the intent descriptions that are generated to include all possible intents within the prompt may be uniquely distinguished from each other, and thus the quality of the intent descriptions of the second data may be higher than that of the first data. In one embodiment, the dependent prompt may be called multiple times to obtain a plurality of dependent intent descriptions for a single intent name.

The dataset obtained from the language model in this manner may be used as retraining data for fine-tuning the intent classification model, as test data for testing the fine-tuned intent classification model or determining performance, or in an interim reasoning process before performing a next reasoning process in the chain of thought (CoT) reasoning process of an AI chatbot.

Meanwhile, in one embodiment, in addition to the first data or second data, third data may be further included in which an intent and an intent description for the intent are manually reviewed and adjusted by an operator. The third data may include a refined intent description. In other words, the third data is data having the highest quality for determining the accuracy of the intent classification model, and the third data may be used only for validation of the intent classification model, or may be selectively included in the dataset to improve the accuracy of the intent classification model.

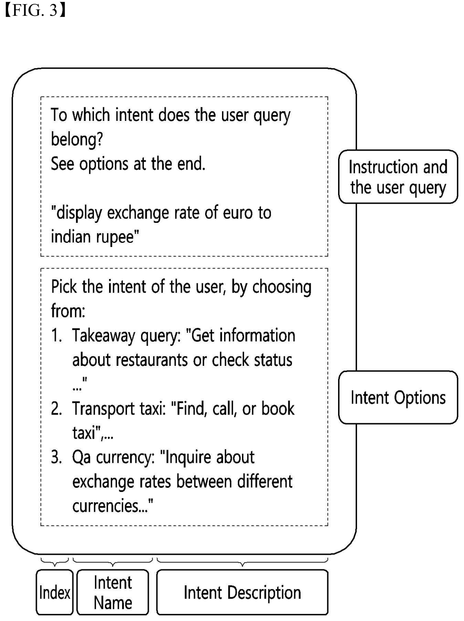

In addition, the dataset secured as described above may be configured in the form of an input prompt for fine-tuning the intent classification model, and an example of the dataset-based input prompt is shown in FIG. 3.

Referring to FIG. 3, an input prompt that is input to an intent classification model may be divided into a section including an instruction for causing the model to classify a given intent and a user query (instruction and user query) and a section including intent options (intent option). Here, the intent options may include an intent name and an intent description for the intent name. In other words, the input prompt for fine-tuning the intent classification model is generated based on first data and second data, and additionally third data, but the format of the input prompt generated by the first to third data may be identical.

In order to improve the performance of the intent classification model, the training system of one embodiment may perform intent classification of the intent classification model by inputting an input prompt based on the dataset of the above-described language model. At this time, the input prompt that is input to the intent classification model may be configured based on the first data, the second data, or the third data, or may be configured to include all of them.

In addition, the training system of one embodiment may determine the performance of the intent classification model by inputting a test dataset to the intent classification model retrained based on the retraining dataset.

As such, the intent classification model retrained based on the dataset including intent descriptions can improve classification accuracy compared to a model that has not been retrained, and evaluation of the models will be described below.

Meanwhile, the training system of one embodiment may further include a ranker for controlling the number of intent options included in the retraining input prompt. When intent descriptions are included in the model retraining input prompt, the length of the input prompt increases in proportion to the number of intent options.

For example, assuming that a model may receive up to 1024 tokens as input, providing a 10-word description for each intent for 100 intents increases the likelihood of exceeding the input length limit. To solve this problem, the ranker of one embodiment may calculate similarity between user queries and intent descriptions, sort all intent options in descending order according to the similarity, and then pass only the top k intents to the intent classification model. According to one embodiment, by selecting the k intent options with the highest similarity, the input length may be optimized instead of including all intents in the model input. Performance evaluation of the intent classification model by increasing and decreasing the number of intent options will be described below.

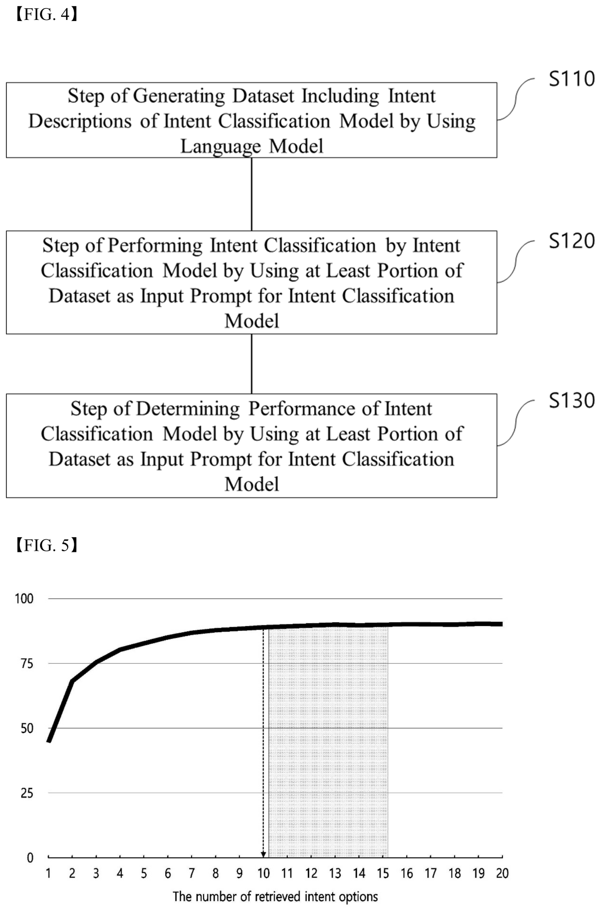

As shown in FIG. 4, the method for training an intent classification model using a language model, implemented in the system for training the intent classification model using the language model according to one embodiment of the present invention, may include: a step of generating a dataset including intent descriptions of an intent classification model using a language model (S110); a step of performing intent classification by the intent classification model using at least a portion of the dataset as an input prompt for the intent classification model (S120); and a step of determining performance of the intent classification model by using at least a portion of the dataset as an input prompt for the intent classification model (S130). Here, the dataset may include first data including independent intent descriptions and second data including dependent intent descriptions.

In the step of generating the dataset including intent descriptions of the intent classification model by using the language model (S110), the training system may obtain a dataset for the pre-trained intent classification model from a separate language model. In other words, the training system of the present embodiment may obtain a dataset for fine-tuning the intent classification model from a separate language model, for example, ChatGPT. In order to obtain the dataset from the language model, the training system inputs a pre-written command prompt into the language model to obtain the dataset. At this time, the command prompt that is input to the language model may include two command prompts to determine the quality of the data. An independent prompt may be a command prompt for obtaining first data including independent intent descriptions from the language model, and a dependent prompt may be a command prompt for obtaining second data including dependent intent descriptions.

The first data obtained by the independent prompt includes a plurality of intent names and intent descriptions for the intent names, but the plurality of intent names included in the first data become difficult or impossible to determine differences from each other by the intent classification model. In other words, the intent descriptions in the first data lack comparative context, resulting in low quality of the intent descriptions.

The second data obtained by the dependent prompt includes a plurality of intent names and intent descriptions for the intent names. This second data includes a plurality of intent names and intent descriptions for the intent names, and the intent classification model may determine the differences between the plurality of intent names included in the second data. In other words, the intent descriptions of the second data can be uniquely distinguished from each other, and thus the quality of the intent descriptions of the second data may be higher than that of the first data.

The dataset obtained from the language model in this manner may be used as retraining data for fine-tuning the intent classification model, as test data for testing the fine-tuned intent classification model or determining performance, or in an interim reasoning process before performing a next reasoning process in the chain of thought (CoT) reasoning process of an AI chatbot.

In the step of performing intent classification by the intent classification model by using at least a portion of the dataset as an input prompt for the intent classification model (S120), the input prompt that is input to the intent classification model may take the form of a section including an instruction for causing the model to classify a given intent and a user query (instruction and user query) and a section including intent options (intent option). Accordingly, the dataset obtained from the language model is reconfigured into the input prompt format of the intent classification model. The intent classification model may be fine-tuned by inputting a first input prompt based on first data configured to include independent intent descriptions or a second input prompt based on second data configured to include dependent intent descriptions. The intent classification model retrained with the first input prompt and the intent classification model retrained with the second input prompt may differ in classification accuracy and performance, and performance comparison between these models will be described below.

In the step of determining performance of the intent classification model by using at least a portion of the dataset as an input prompt for the intent classification model (S130), the training system of one embodiment may conduct testing by using a first input prompt based on first data including independent intent descriptions obtained from a language model or a second input prompt based on second data including dependent intent descriptions. At this time, the input prompts for testing are distinguished from the input prompts for training the intent classification model, and the input prompts for testing are input to each of a baseline model that has not been retrained, i.e., a vanilla intent classification model, an intent classification model retrained with the first input prompt, and an intent classification model retrained with the second input prompt and may be used to test each model and evaluate the performance of the models.

Meanwhile, the method for training an intent classification model using a language model according to one embodiment may further include a feature of controlling number of intent options included in a first input prompt based on first data, a second input prompt based on second data, and a third input prompt based on third data, that is, a step of controlling number of intent options in an input prompt of the intent classification model.

To this end, the training system of one embodiment may use a ranker that calculates similarity between user queries and intent descriptions included in the input prompt sorts all intent options sorted in descending order according to the similarity, and select only the top k intents.

The performance of the intent classification model may be evaluated according to the method and system for training an intent classification model using intent descriptions of one embodiment of the present invention having the above-described features.

Intent classification performance of each model may be evaluated by testing a first intent classification model retrained with a first input prompt including independent intent descriptions derived from a language model, a second intent classification model retrained with a second input prompt including dependent intent descriptions, and a baseline model trained without intent descriptions.

**[Table 1]**

| | | Types of descriptions used in training testing | | |
|---|---|---|---|---|
| | | Without descriptions | Independent descriptions | Dependent descriptions |
| Types of descriptions used in training | Without descriptions | 84.28% ± 3.95% | 84.15% ± 3.67% | 90.55% ± 2.16% |
| | Independent descriptions | 81.93% ± 4.05% | 85.64% ± 3.53% | 90.97% ± 1.45% |
| | Dependent description | 82.1% ± 3.56% | 86.99% ± 3.09% | 91.75% ± 1.91% |

As shown in [Table 1] , when testing the first intent classification model (independent descriptions), the second intent classification model (dependent descriptions), and the baseline model (without descriptions) based on a test dataset that did not include intent descriptions, the baseline model exhibited the highest performance of 84.28%, while the first intent classification model showed lower performance of 81.93%, and the second intent classification model showed performance of 82.1%. However, when each model was tested using the first input prompt including independent intent descriptions, the first intent classification model and the second intent classification model achieved 85.64% and 86.99% respectively, with performance improvements of 1.49% and 2.84% compared to the baseline model. When each model was tested using the second input prompt including dependent intent descriptions, the first intent classification model and the second intent classification model achieved 90.97% and 91.75% respectively, with performance improvements of 0.42% and 1.2% compared to the baseline model. These results confirm that when conducting a test based on an input prompt that includes intent descriptions, the intent descriptions are more effective in interpreting the detailed meaning of the intents of a user's utterance and that model performance can be improved in testing when the model is adjusted based on intent descriptions.

In addition, the second intent classification model retrained with dependent intent descriptions showed performance of 86.99% when tested with the first input prompt including independent intent descriptions, while it showed performance of 91.75% when tested with the second input prompt including dependent intent descriptions, confirming that improving the quality of input prompts including intent descriptions during testing has a greater impact on model performance improvement than model training itself.

In addition, the results showed that the second intent classification model retrained based on the second input prompt including dependent intent descriptions showed further improved performance during testing compared to the first intent classification model, confirming that model performance can be improved by enhancing the quality of input prompts for retraining.

**[Table 2]**

| | | Types of descriptions used in testing | |
|---|---|---|---|
| | | One dependent description | One cleansed description |
| Types of descriptions used in training | Five dependent descriptions | 82.05% ± 3.15% | 85.28% ± 1.69% |
| | One dependent description | 82.52% ± 2.44% | 85.71% ± 1.61% |
| | One cleansed description | 83.4% ± 3.71% | 85.79% ± 1.69% |

Meanwhile, in one embodiment, performance may be evaluated according to the number of intent descriptions (number of intent options) in the input prompt used during retraining and testing of an intent classification model. As shown in [Table 2] , testing was conducted using a model trained by varying the number of intent descriptions in the second input prompt including dependent intent descriptions. At this time, performance according to the quality of intent descriptions was also evaluated using a third input prompt based on third data that was qualitatively adjusted by an operator for data including dependent intent descriptions.

After preparing an intent classification model retrained using an input prompt including five dependent intent descriptions per intent (five dependent descriptions), an intent classification model retrained using an input prompt including one dependent intent description per intent (one dependent description), and an intent classification model retrained using an input prompt including one dependent intent description per intent that was manually adjusted (refined) by an operator (one refined description), each model was tested based on an input prompt including one dependent intent description per intent and an input prompt including one dependent intent description per intent that was manually adjusted by the operator. At this time, the input prompt manually adjusted by the operator had the highest quality intent descriptions. As shown in [Table 2] , the performance of the model trained with single intent descriptions and the model trained with multiple intent descriptions did not differ significantly, but the model trained with intent descriptions having higher quality (manually adjusted by the operator) showed the highest performance. Through this, it was confirmed that the intent classification model is more influenced by the quality of intent descriptions than by the quantity of intent descriptions.

Meanwhile, referring to FIG. 5, the number of intent options (number of intent descriptions) included in the input prompt for retraining the intent classification model may be optimized. The training system of one embodiment includes a ranker for adjusting the number of intent options included in the input prompt for retraining. The ranker may calculate similarity between user queries and intent descriptions in the input prompt and sort all intent options in descending order according to the similarity. In other words, the ranker serves to transmit only the top k intents among the intent options sorted in descending order to the intent classification model. Referring to FIG. 5, it can be confirmed that the performance of the intent classification model improved as the number of top intent options (k) increases. For example, in the CLINC dataset, the intent classification model showed an accuracy (performance) of approximately 44.21% when k was 1, and the performance improved as *k* increased, showing approximately 90% accuracy when *k* reached 13. According to these results, it was confirmed that optimal performance was achieved when retraining or testing the intent classification model using an input prompt having the top 10 intent options. For example, when the CLINC dataset includes 75 intent options and each intent description include 10 tokens, approximately 1,200 to 1,300 tokens are required, but when using only the top 10 intent options using the ranker, the length of the input prompt may be reduced to 300 to 400 tokens. In other words, the training system of this embodiment has the effect of reducing input size by approximately 75% while obtaining the same or similar performance in the intent classification model by setting the number of intent descriptions in the input prompt to 10 using the ranker.

As described above, according to the method and system for training an intent classification model using intent descriptions of one embodiment of the present invention and the evaluation results of the training system of one embodiment, it can be confirmed that the intent classification model retrained based on intent descriptions for intents shows higher performance when using intent description-based prompts during testing, higher quality intent descriptions during model training and testing affect model performance improvement, and the quality of intent descriptions is more effective for model performance improvement than the number of intent descriptions.

In one embodiment, the processor may receive a user's utterance, evaluate similarity between the user utterance and the natural language-based descriptions by referring to a database including a plurality of intent candidates and natural language-based descriptions for the respective intents, determine top k intent candidates having high relevance to the user's utterance based on the similarity evaluation, and determine an intent suitable for the user's utterance by inputting the determined k intent candidates and the natural language-based descriptions.

In one embodiment, the natural language-based description may include at least one of an independent intent description, a dependent intent description, and a refined intent description. Meanwhile, one embodiment of the present invention may be implemented as an application-specific integrated circuit (ASIC) that is manufactured to suit the specific functions of particular application fields and devices.

ASICs are also referred to as custom semiconductors. Unlike standard semiconductors that have specified standards and is applicable to any electronic product or application when certain requirements are met, ASICs are integrated circuits manufactured by semiconductor manufacturers according to specific orders for use in specific products or functions. In other words, custom semiconductors are designed and manufactured to perform only the functions necessary for specific devices or specific functions. Custom semiconductors are broadly divided into full custom ICs, in which circuits are designed and manufactured from the beginning according to user requirements based on design methods, and semi-custom ICs, in which circuits are designed and manufactured using part of standardized designs.

Custom semiconductors are mainly used in communication systems, high-performance computing systems, consumer electronics, automobiles, industrial automation, medical devices, military, aerospace industry, and the like. Recently, they have been applied to AI semiconductors that execute large-scale computations required for AI implementation with high performance and power efficiency.

ASICs are used as key components of, for example, network routers, switches, and modems in communication systems to perform data packet processing, protocol conversion, signal processing, and the like, thereby providing high throughput and low latency. In high-performance computing systems, ASICs are used as key components for high-speed processing and parallel processing, and in consumer electronics such as digital cameras, smartphones, tablets, and game consoles, ASICs provide the high-performance and low-power solutions required to perform specific functions. In the automotive industry, ASICs are used to control various electronic systems within automobiles, and in industrial automation systems, ASICs provide solutions for high-precision control and high-performance processing.

ASICs to which one embodiment of the present invention is applied may include a memory in which an individual memory interface (I/F) is implemented and may include a plurality of functional blocks that request memory access. Each functional block may be a direct memory access (DMA) functional block, a processor, a video processor, a cache controller, a decompression block, or a data path block. The basic configuration of the ASICs may include transistors that amplify or switch electrical signals, logic gates that are circuits performing logical functions by combining transistors, memory cells that store data, analog circuits that are circuits processing continuous voltage or current by combining transistors, microprocessors that are pre-designed to perform specific functions, DSPs, IP cores (Intellectual Property Cores) such as graphics cores, and the like.

The ASICs may also include an individual memory I/F that interfaces with individual memory and an embedded memory I/F that interfaces with embedded memory, and the individual memory I/F may be connected to each functional block to receive memory access signals (e.g., control signals, address signals, and data signals) and generate signals for controlling the individual memory based on these input signals. The embedded memory I/F may be connected to each functional block to receive memory access signals (e.g., control signals, address signals, data signals) and generate modified memory access signals for controlling the embedded memory based on these input signals. The individual memory I/F and the embedded memory I/F are designed within a memory control block of the ASIC to provide a memory control structure that may be flexibly applied to both individual memory and embedded memory.

In addition, an ASIC for an ANN includes a plurality of neurons arranged in an array and a plurality of synaptic circuits, and each neuron may include a register, a microprocessor, and at least one input, and each synaptic circuit may include a memory for storing synaptic weights. Here, each neuron of the ASIC may be connected to at least one other neuron through one of the plurality of synaptic circuits.

Although the present disclosure has been described above as generally being implementable by a computing device, those skilled in the art will appreciate that the present disclosure may be implemented in combination with computer-executable instructions and/or other program modules executable on one or more computers and/or as a combination of hardware and software. Those skilled in the art will understand that information and signals may be represented using any of a variety of different technologies and techniques. For example, data, instructions, commands, information, signals, bits, symbols, and chips that may be referenced in the above description may be represented by voltages, currents, electromagnetic waves, magnetic fields or particles, optical fields or particles, or any combination thereof.

Those skilled in the art will appreciate that the various exemplary logical blocks, modules, processors, means, circuits, and algorithm steps described in connection with the embodiments disclosed herein may be implemented by electronic hardware, various forms of program or design code (referred to herein as software for convenience), or combinations of both. To clearly describe this interchangeability of hardware and software, various illustrative components, blocks, modules, circuits, and steps have been described above generally in terms of their functionality. Whether such functionality is implemented as hardware or software depends upon the particular application and design constraints imposed on the overall system. Those skilled in the art may implement the described functionality in varying ways for each particular application, but such implementation decisions should not be interpreted as departing from the scope of the present disclosure.

The various embodiments presented herein may be implemented as a method, apparatus, or article of manufacture using standard programming and/or engineering techniques. The term "article of manufacture" includes a computer program, carrier, or media accessible from any computer-readable storage device. For example, computer-readable storage media include magnetic storage devices (e.g., hard disks, floppy disks, magnetic strips, etc.), optical disks (e.g., CDs, DVDs, etc.), smart cards, and flash memory devices (e.g., EEPROMs, cards, sticks, key drives, etc.), but are not limited thereto. In addition, the various storage media presented herein include one or more devices and/or other machine-readable media for storing information.

It should be understood that the specific order or hierarchy of steps in the processes presented is an example of exemplary approaches. It should be understood that, based on design priorities, the specific order or hierarchy of steps in the processes may be rearranged within the scope of the present disclosure. The accompanying method claims present elements of various steps in a sample order, but are not meant to be limited to the specific order or hierarchy presented.

The description of the presented embodiments is provided to enable any person skilled in the art to use or practice the present disclosure. Various modifications to these embodiments will be apparent to those skilled in the art, and the general principles defined herein may be applied to other embodiments without departing from the scope of the present disclosure. Thus, the present disclosure is not to be limited to the embodiments presented herein, but is to be interpreted in the widest scope consistent with the principles and novel features presented herein.

## Claims

1. A system for training an intent classification model using intent descriptions, comprising:
at least one processor; and
at least one memory storing instructions or information executed by the at least one processor;
wherein an operation performed by the instructions or information executed by the at least one processor includes:
an operation of generating a dataset including intent descriptions of an intent classification model using a language model;
an operation of performing intent classification by the intent classification model using at least a portion of the dataset as an input prompt for the intent classification model; and
an operation of determining performance of the intent classification model using at least a portion of the dataset as an input prompt for the intent classification model;
wherein the dataset includes: first data including independent intent descriptions in which intent names and intent descriptions for the intent names do not analyze context of other intent descriptions such that differences are mutually indistinguishable; and second data including dependent intent descriptions in which intent names and intent descriptions for the intent names analyze context of other intent descriptions such that differences are mutually distinguishable.

2. The system of claim 1, wherein a command prompt that is input to the language model to output the dataset from the language model includes: an independent prompt for obtaining the first data including a plurality of intent descriptions for a single intent; and a dependent prompt for obtaining the second data including a plurality of intent descriptions for a plurality of intents such that each of the plurality of intents and the plurality of intent descriptions are distinguished from each other.

3. The system of claim 1, wherein the input prompt includes an instruction and user query section; and an intent option section including intent names and intent descriptions for the intent names.

4. The system of claim 3, further comprising a ranker that adjusts the number of the intent options, wherein the ranker calculates similarity between the user query and the intent descriptions.

5. The system of claim 1, wherein the intent classification model is retrained using at least a portion of the first data or retrained using at least a portion of the second data.

6. The system of claim 1, wherein at least a portion of the first data is provided as an input prompt when determining performance of the intent classification model, or at least a portion of the second data is provided as an input prompt when determining performance of the intent classification model.

7. The system of claim 1, wherein the intent classification model, when retrained with at least a portion of the second data, exhibits improved accuracy performance in intent classification.

8. A method for training an intent classification model using intent descriptions, wherein the method for training the intent classification model is executed by at least one processor, the method comprising:
a step of generating a dataset including intent descriptions of an intent classification model by using a language model;
a step of performing intent classification by the intent classification model by using at least a portion of the dataset as an input prompt for the intent classification model; and
a step of determining performance of the intent classification model by using at least a portion of the dataset as an input prompt for the intent classification model;
wherein the dataset includes: first data including independent intent descriptions in which intent names and intent descriptions for the intent names do not analyze context of other intent descriptions such that differences are mutually indistinguishable; and second data including dependent intent descriptions in which intent names and intent descriptions for the intent names analyze context of other intent descriptions such that differences are mutually distinguishable.

9. The method of claim 8, wherein in the step of generating the dataset, a command prompt that is input to the language model to generate the dataset from the language model is configured, and the command prompt includes: an independent prompt for obtaining the first data including a plurality of intent descriptions for a single intent; and a dependent prompt for obtaining the second data including a plurality of intent descriptions for a plurality of intents such that each of the plurality of intents and the plurality of intent descriptions are distinguished from each other.

10. The method of claim 8, wherein in the step of performing intent classification by the intent classification model or in the step of determining performance of the intent classification model, the input prompt includes an instruction and user query section and an intent option section including intent names and intent descriptions for the intent names.

11. The method of claim 10, wherein a ranker for controlling number of the intent options calculates similarity between the user query and the intent descriptions and sorts the intent descriptions in descending order according to the similarity.

12. The method of claim 8, wherein, in the step of performing intent classification by the intent classification model, the intent classification model is retrained using at least a portion of the first data or retrained using at least a portion of the second data.

13. The method of claim 8, wherein in the step of determining the performance of the intent classification model, at least a portion of the first data is provided as an input prompt when determining performance of the intent classification model, or at least a portion of the second data is provided as an input prompt when determining performance of the intent classification model.

14. The method of claim 8, wherein the intent classification model, when retrained with at least a portion of the second data, exhibits improved accuracy performance in intent classification.

15. A program stored on a computer-readable recording medium for executing the method of any one of claims 8 to 14 on a computer.
